# EUROPÄISCHE PATENTANMELDUNG

(11) **EP 0 908 868 A2**
(43) Veröffentlichungstag der Anmeldung: **14.04.1999**
(21) Anmeldenummer: 98203355.7
(22) Anmeldetag: 06.10.1998
(51) Int. Cl.: G10L 3/00

(54) **Rechneranordnung zur Spracherkennung**

(30) Priorität: 10.10.1997 DE 19744690
(71) Anmelder: Philips Patentverwaltung GmbH, 22335 Hamburg (DE); Koninklijke Philips Electronics N.V., 5621 BA Eindhoven (NL)
(72) Erfinder: Budde, Wolfgang O., Dr.-Ing., Röntgenstrasse 24, 22335 Hamburg (DE); Steinbiss, Volker, Dr., Röntgenstrasse 24, 22335 Hamburg (DE)
(74) Vertreter: von Laue, Hanns-Ulrich, Dipl.-Ing.

(57) **Zusammenfassung**

Die Abstandsberechnung stellt eine zentrale, ständig wiederkehrende Aufgabe bei der Muster- und Spracherkennung dar. Sie wird in der Spracherkennung als Ähnlichkeitsmaß zwischen einem Teil einer Sprachäußerung und einer Sprachreferenz eingesetzt. In der Bildverarbeitung und Mustererkennung wird sie zur Datenkompression (MPEG) eingesetzt. Die Abstandsberechnung benötigt die meiste Rechenzeit, so daß eine Reduzierung der Rechenzeit eine erhebliche Verbesserung der Leistungsfähigkeit bewirkt. Eine Reduzierung der Rechenzeit wird durch die Integration der Abstandsberechnung in einen Speicherbaustein (1), in dem insbesondere die Referenzdaten gespeichert sind, erreicht. Die anderen Komponenten (2, 3, 4) des Gesamtsystems werden durch diese Integration von dieser sich ständig wiederholenden Aufgabe entlastet und stehen in dieser Zeit für komplexere Vorgänge zur Verfügung. Die Abstandsberechnung wird durch diese Integration wesentlich verkürzt, da die Kommunikation zwischen Speicherteilen und Berechnungseinheit direkt ohne Nutzung eines Bussystems erfolgt.

## Beschreibung

Die Erfindung bezieht sich auf Rechneranordnung zur Spracherkennung mit einem Mikroprozessor, Ein - und Ausgangsschnittstellen und einem Datenbus, bei dem eingehende Testsignale digital gewandelt in Segmente unterteilt und Eigenschaften der Segmente Testvektoren zugeordnet werden, zu denen ein Abstand bezüglich Referenzvektoren berechnet wird.

Die Abstandsberechnung wird in der Spracherkennung als Ähnlichkeitsmaß zwischen einem Teil einer Sprachäußerung und einer Sprachreferenz eingesetzt und stellt eine zentrale, ständig wiederkehrende Aufgabe bei der Muster- und Spracherkennung dar. Sie benötigt die meiste Rechenzeit, so daß eine Reduzierung der Rechenzeit eine erhebliche Verbesserung der Leistungsfähigkeit bewirkt. In der Bildverarbeitung und Mustererkennung wird sie zur Datenkompression (MPEG) eingesetzt.

Bisher wurden zur Spracherkennung zusätzliche spezielle Hardwarebaugruppen verwendet. Auf diesen befindet sich die Wandlung der eingehenden analogen Sprachsignale in digitale Signale, die Merkmalsextraktion, bei der das in Segmente unterteilte, eingehende digitalisierte Sprachsignal mit seinen bezeichnenden Eigenschaften entsprechenden Komponenten von Vektoren zugeordnet wird. Für die so gebildeten Testvektoren wird mittels eines digitalen Signalprozessor der Abstand zu Referenzvektoren berechnet.

Andererseits gibt es softwarebasierte Spracherkennungssysteme, bei denen der Erkennungsprozeß ohne spezielle Hardware, also mit den Systemkomponenten eines universellen Rechners erfolgt. Die Digitalisierung der eingehenden Testsignale wird beispielsweise auf der Soundkarte vorgenommen. Die rechenintensive Abstandsberechnung wird auf dem Hauptprozessor des System vorgenommen. Dies setzt einen sehr leistungsstarken Prozessor voraus und nimmt außerdem einen beachtlichen Teil seiner Rechenleistung in Anspruch, die dann nicht mehr für andere Vorgänge zur Verfügung steht. Meist wird die Erkennung des gesprochenen Textes jedoch im offline Modus durchgeführt, da in wenigen Anwendungen ein ausreichend leistungsstarker Prozessor vorhanden ist.

Die Aufgabe der Erfindung ist es deshalb, eine Anordnung anzugeben, mit der eine Berechnung der Abstände beschleunigt wird.

Diese Aufgabe wird dadurch gelöst daß, ein Abstandsberechner und ein Speicherbaustein vorgesehen sind, die auf einem gemeinsamen Baustein integriert sind, wobei dieser wenigstens einen Datenanschluß zum Zuführen von Testvektoren und Referenzvektoren und zum Abgeben von berechneten Abständen aufweist.

Dieses erfindungsgemäße universelle Rechnersystem gestattet es, mit einem gewöhnlichen Mikroprozessor mit seiner üblichen Peripherie durch Kombination mit einem Speicher mit integriertem Abstandsberechner Spracherkennung zu betreiben. Dadurch wird der Mikroprozessor von der rechenintensiven Abstandsberechnung entbunden und seine Rechenleistung steht für andere Vorgänge zur Verfügung.

Dazu werden dem Rechnersystem über die Ein - und Ausgabeschnittstellen analoge Daten zugeführt, die nach ihrer Aufbereitung zur Abstandsberechnung dem Speicherbaustein mit integriertem Abstandsberechner zugeführt werden.

Ein zusätzlicher Vorteil ist der kurze Kommunikationsweg. Da die zu vergleichenden Daten direkt der Abstandsberechnung aus den jeweiligen Speichern zugeführt werden, geht dadurch keine wertvolle Rechenzeit verloren. Das System übergibt die Testvektoren und erhält die berechneten Abstände zurück. Da die Abstandsberechnung lokal innerhalb eines Speicherbausteins durchgeführt wird, stehen dem Systemprozessor mit Ausnahme des betroffenen Speicherbausteins alle Komponenten des Systems für andere Vorgänge zur Verfügung.

Außerdem sind durch diese Integration keine Datentransfers über einen externen Daten- oder Adreßbus für die Durchführung der Abstandsberechnung erforderlich, d.h. die Speicherzugriffe beschränken sich auf die internen lokalen Speicherbereiche, so daß die Abstandsberechnung direkt und in signifikant kurzer Zeit durchgeführt wird. Die Referenzdaten werden vor oder zumindest nicht während eines Erkennungslaufs in den Referenzdatenspeicher geladen. Auch eine eventuelle Aktualisierung dieses Referenzdatenbestandes erfolgt zu unkritischen Zeitpunkten.

Ein weiterer Vorteil dieses Rechnersystems ist die mögliche Umrüstung eines für normale Zwecke konzipierten Rechners. Ein konventioneller Speicherbaustein wird durch einen Speicherbaustein mit integriertem Abstandsberechner ausgetauscht. Dadurch ist das Rechnersystem in der Lage ohne gravierende Einschränkung seiner Leistungsfähigkeit Spracherkennungsvorgänge vorzunehmen.

Die Integration eines Abstandsberechners in einen Speicherbaustein bringt weitere Vorteile des optimierten Speicherherstellungsprozesses mit sich. Speicherbausteine werden mit einer höheren Dichte an Bauelementen, als Logikbausteine produziert, womit sich eine optimalere Platzausnutzung ergibt.

Anhand eines Beispiels soll die Effektivität dieser Integration gezeigt werden.

In einem typischen Fall werden alle 16 ms die Abstände eines Testvektors zu beispielsweise 2000 Referenzvektoren benötigt. Hierzu ist in etwa eine Datenrate von mindestens 3 MByte pro Sekunde erforderlich. Diese Aufgabe würde einen Standardsignalprozessor mit einer Taktfrequenz von 20 MHz etwa 12 ms beschäftigen. Ein Standardmikroprozessor benötigt dafür erheblich mehr Zeit. Durch die Integration der Abstandsberechnung reduziert sich die Dauer zur Bewältigung dieser Aufgabe bei gleicher Taktfrequenz auf etwa ein Zehntel, d.h. ca. 1,2 ms. Der Geschwindigkeitsgewinn ist auf die optimierte Adressierung, die kompakte Datenspeicherung und den verkürzten Datenpfad zurückzuführen.

Im folgenden wird nun ein Ausführungsbeispiel anhand der Figuren erläutert.

Es zeigen:
Fig. 1 Integration der Abstandsberechnung in ein Rechnersystem
Fig. 2 Abstandsbildung zwischen Referenzvektoren und Testvektoren
Fig. 3 Internen Aufbau eines Speichers mit integrierter Abstandsberechnung

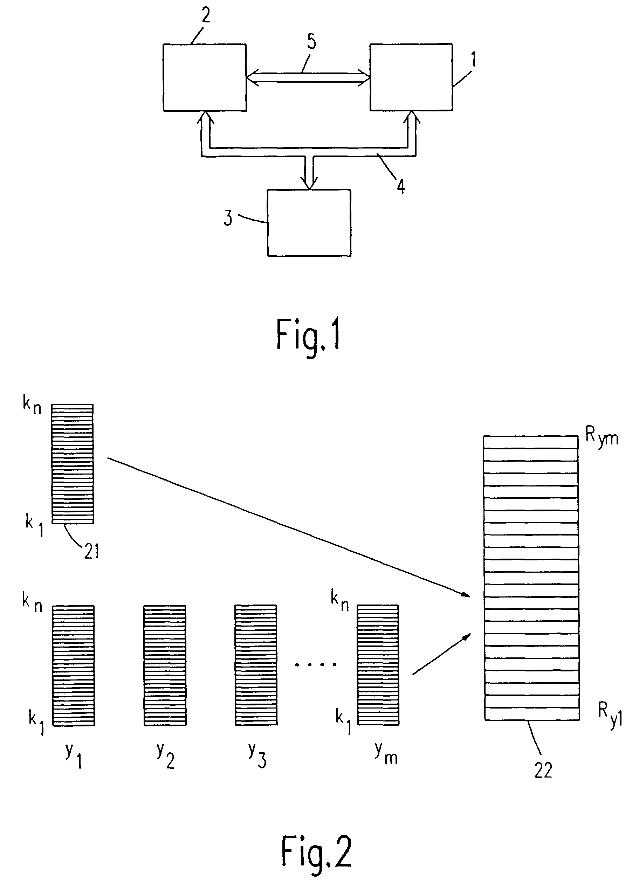

Fig. 1 zeigt einen prinzipiellen Aufbau eines Rechnersystems. Als Elemente sind der Speicher mit integrierter Abstandsberechnung 1, der Systemprozessor 2 und alle weiteren notwendigen bzw. optionalen Komponenten als Einheit 3 dargestellt. Die Verknüpfung der genannten Elemente 1 bis 3 erfolgt über den Daten- bzw. Adreßbus 4. Über Steuerleitungen 5 wird u.a. eine Initialisierung der Abstandsberechnung 1 vorgenommen. Eingehende Testsignale werden über Schnittstellen, die in Einheit 3 enthalten sind, dem Gesamtsystem zugeführt. Diese Signale werden der Signalart entsprechend umgewandelt und in Segmente unterteilt. Die verschiedenen Eigenschaften eines Segments werden jeweils Komponenten eines Testvektors zugeordnet. Ein Testvektor wird dem Speicher mit integrierter Abstandsberechnung 1 über den Bus 4 zugeführt. In diesem Speicher mit integrierter Abstandsberechnung 1 wird die Abstandsberechnung zwischen diesem Testvektor und wenigstens einem Teil der Referenzdaten durchgeführt, und die berechneten Abstände werden dem Gesamtsystem über den Bus 4 zur weiteren Verarbeitung zugeführt.

Fig. 2 zeigt einen Testvektor 21, der aus mehreren Komponenten kₙ besteht. Die Referenzvektoren y₁ bis yₘ bestehen aus der gleichen Anzahl Komponenten kₙ wie der Testvektor 21. In den Komponenten kₙ dieser Vektoren sind Eigenschaften der zu vergleichenden Sprachsignalteile enthalten. Die Komponenten k₁ bis kₙ des Testvektors 21 werden mit den Komponenten k₁ bis kₙ wenigstens eines Teils der Referenzvektoren y₁ bis yₘ verglichen. Für die Abstandsberechnung werden die Partialabstände rₙ der Komponentenwerte des Testvektors 21 mit den korrespondierenden Komponentenwerten der betrachteten Referenzvektoren y₁ bis yₘ gebildet. Die errechneten Partialabstände rₙ der Komponenten kₙ eines Referenzvektors y₁ bis yₘ gehen unmittelbar mittels Aufsummierung in einen Abstand R_{ym} ein. Zur Bildung des Abstandes R_{ym} sind grundsätzlich Abstandsberechnungen nach Gauß, Laplace o.a. möglich. Dieser Abstand R_{ym} stellt ein Ähnlichkeitsmaß des Referenzvektors y₁ bis yₘ zum Testvektor 21 dar. Die Abstände R_{y1} bis R_{ym} werden in einer Liste 22 gespeichert, wobei die Anzahl der Abstände R_{ym} von der Anzahl der Referenzvektoren y₁ bis yₘ abhängt, die mit dem Testvektor 21 verglichen werden. Aus Fig. 2 ist ersichtlich daß eine sehr große Anzahl von Berechnungen notwendig ist, um die Komponenten kₙ des Testvektors 21 mit den relevanten Komponenten kₙ der Referenzvektoren y₁ bis yₘ zu vergleichen. Zusätzlich muß für jeden Referenzvektor y₁ bis yₘ noch der Abstand R_{ym} aus den Partialabständen rₙ berechnet werden. Für diese große Anzahl einfacher, ständig wiederkehrender Berechnungen, die außerdem in sehr kurzer Zeit realisiert werden müssen, wird sehr viel Rechenzeit benötigt.

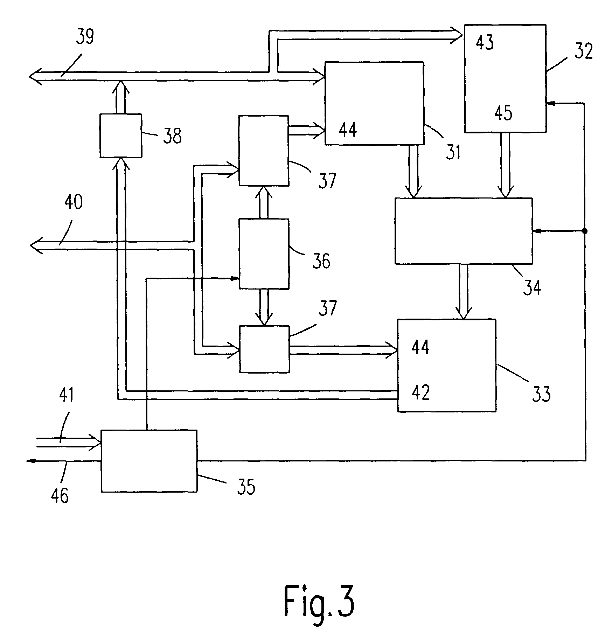

Fig.3 zeigt den internen Aufbau eines erfindungsgemäßen Speicherbausteins. Dieser Speicherbaustein enthält einen Referenzspeicher 31 und einen Testspeicher 32, die mit einem Abstandsberechner 34 verbunden sind. Dieser ist mit einem Abstandsspeicher 33 gekoppelt, der berechnete Abstände über den Datenausgang 42 und einen Treiber 38 zum Datenanschluß 39 und darüber zum Bus 4 (Fig. 1) zur weiteren Verarbeitung an das System weiterleitet. Weiterhin enthält dieser Speicherbaustein einen Adreßberechner 36, Adreßmultiplexer 37 und eine Steuereinheit 35.

Der Referenzspeicher wird vor einem Erkennungslauf über den Datenanschluß 39 mit Referenzvektoren geladen. Der Testspeicher 32 erhält die Testvektoren ebenfalls über den Datenanschluß 39 am Dateneingang 43. Die zu vergleichenden Referenzvektoren und der jeweilige Testvektor werden dem Abstandsberechner 34 zugeführt. In dem Abstandsberechner 34 werden der jeweilige Referenzvektor und der Testvektor miteinander verglichen und die Abstände der Komponenten zueinander gebildet. Die Abstände der verglichenen Vektoren werden in einem Abstandsspeicher 33 gespeichert.

Der Testspeicher 32 ist als Ringspeicher ausgeführt und wird zu Beginn jeder Abstandsberechnung vom Systemprozessor mit dem Testvektor geladen. Die jeweils aktuell zu vergleichende Komponente wird durch einen Schiebevorgang an dem Datenausgang 45 des Testspeichers 32 bereitgestellt. Eine andere Möglichkeit ist ein Inkrementieren der jeweils aktuellen Adresse der zu betrachtenden Komponente. Der Testspeicher ist so aufgebaut, daß der Testvektor nach einem kompletten Vergleich aller Komponenten des Testvektors mit allen Komponenten eines Referenzvektors wieder in der Ausgangsform im Testspeicher vorliegt oder die aktuelle Adresse die der ersten Komponente des Testvektors ist.

Nachdem für jede Komponente eines Testvektors ein Partialabstand zu der entsprechenden Komponente eines Referenzvektors gebildet und aus deren Kombination ein Abstand gebildet wurde, wird ein nächster Referenzvektor mit dem Testvektor verglichen. Sowohl der Referenzspeicher 31 als auch der Abstandsspeicher 33 werden über Adreßmultiplexer 37 adressiert. Die Adreßmultiplexer 37 leiten die vom Adreßberechner 36 bereitgestellten Adressen über Adreßeingänge 44 an den Referenzspeicher 31 und/oder an den Abstandsspeicher 33 weiter. Die Adresse für den Abstandsspeicher läßt sich am einfachsten aus der Adresse für den Referenzspeicher durch Weglassen der für die Adressierung der einzelnen Vektorkomponenten erforderlichen Adreßleitungen ableiten. Die Adreßmultiplexer 37 ermöglichen, den Referenzspeicher 31 und den Abstandsspeicher 33 auch von außen über den Adreßanschluß 40, der mit dem externen Bus 4 (Fig. 1) verbunden ist, zu adressieren. Die Steuereinheit 35 wird vom System über Steuerleitungen 41 initialisiert und übernimmt die Ansteuerung der Adreßmultiplexer 37, des Abstandsberechners 34 und des Testspeichers 32. Nach erfolgter Abstandsberechnung zeigt die Steuereinheit 35 dem System die Verfügbarkeit der Abstände Rym mittels der Zustandsleitung 46 an.

Der Referenzspeicher 31 kann auch über ein I²C-Interface mit Referenzvektoren geladen werden. Über diesen Zwei-Draht Anschluß kann der Referenzspeicher 31 auch im off-line Zustand mit Referenzvektoren geladen werden oder der Datenbestand aktualisiert werden. Der Referenzspeicher 31 kann als EEPROM ausgeführt sein, so daß die Referenzvektoren nicht bei jedem erneuten Einschalten geladen werden müssen. Die Referenzvektoren werden nicht während eines Erkennungslaufs in den Referenzspeicher 31 übergeben. Für diesen Ladevorgang wird somit keine Rechenzeit während des Erkennungslaufs benötigt. Nach dem Laden des entsprechenden Testvektors über den Datenanschluß 39 beginnt der Erkennungslauf, in dem die Abstände dieses Testvektors zu den im Referenzspeicher 31 geladenen Referenzvektoren berechnet werden. Die berechneten Abstände werden vom System aus dem Abstandsspeicher 33 über den Datenanschluß 39 ausgelesen und weiterverarbeitet.

## Patentansprüche

1. Rechneranordnung zur Spracherkennung mit einem Mikroprozessor (1), Ein - und Ausgangsschnittstellen (3) und einem Datenbus (4), wobei eingehende Testsignale digital gewandelt in Segmente unterteilt und Eigenschaften der Segmente Testvektoren (21) zugeordnet werden, zu denen ein Abstand (R_{ym}) bezüglich Referenzvektoren (y₁ bis yₘ) berechnet wird, dadurch gekennzeichnet, daß ein Abstandsberechner und ein Speicherbaustein (1) vorgesehen sind, die auf einem gemeinsamen Baustein integriert sind, wobei dieser wenigstens einen Datenanschluß (39) zum Zuführen von Testvektoren (21) und Referenzvektoren (y₁ bis yₘ) und zum Abgeben von berechneten Abständen (R_{ym}) aufweist.

2. Anordnung nach Anspruch 1, dadurch gekennzeichnet, daß der Abstandsberechner in einen Speicherbaustein integriert ist.

3. Anordnung nach Anspruch 1, dadurch gekennzeichnet, daß der Abstandsberechner einen Testspeicher (32) zur Speicherung der Testvektoren (21) enthält, der als Ringspeicher ausgeführt ist und dessen Inhalt bei dem vollständigen Auslesen eines Referenzvektors (y₁ bis yₘ) aus dem Referenzspeicher (31) einmal umläuft.

4. Anordnung nach Anspruch 1, dadurch gekennzeichnet, daß der Abstandsberechner einen Referenzspeicher (31) für eine Anzahl von Referenzvektoren (y₁ bis yₘ), einen Testspeicher (32) für einen Testvektor (21), einen Abstandsberechner (34), der mit dem Referenzspeicher (31) und dem Testspeicher (32) gekoppelt ist, um Abstände (R_{ym}) zwischen Referenzvektoren (y₁ bis yₘ) und Testvektoren (21) zu berechnen, einen Abstandsspeicher (33) zum Speichern der berechneten Abstände (R_{ym}), die über einen Datenanschluß (39) oder Bus (4) abgegeben werden, einen Adreßberechner (36) zum Berechnen von Adressen wenigstens für den Referenzspeicher (31) und den Abstandsspeicher (33) eine Steuereinheit (35) für die Kommunikation mit externen Ein- und Ausgabeelementen über Steuerleitungen (41) und Zustandsleitung (46) für die Ansteuerung des Adreßberechners (36), des Abstandsberechners (34) und des Testspeichers (32) enthält.

5. Anordnung nach Anspruch 4 dadurch gekennzeichnet, daß der Speicherbaustein (1) einen Adreßanschluß (40) aufweist und daß der Adreßanschluß (40) von einer Steuereinheit (35) gesteuert ist und über Adreßmultiplexer (37) mit einem Adreßeingang (44) des Abstandsspeichers (33) und/oder des Referenzspeichers (31) verbunden ist.

6. Anordnung nach einem der Ansprüche 4 dadurch gekennzeichnet, daß der Referenzdatenspeicher (31) als EEPROM ausgeführt ist und mit neuen Referenzdaten in Form von Referenzvektoren (y₁ bis yₘ) ladbar ist.
